# EUROPEAN PATENT SPECIFICATION

(11) **EP 1 190 924 B1**
(45) Date of publication and mention of the grant of the patent: **24.11.2004**
(21) Application number: 01122091.0
(22) Date of filing: 14.09.2001
(51) Int. Cl.: B60T 17/22, B60T 13/66

(54) **Pressure sensor module**
Drucksensormodul
Module capteur de pression

(30) Priority: 15.09.2000 US 232848
(43) Date of publication of application: 27.03.2002
(73) Proprietor: McCurdy, William B., Jr., Watertown, New York 13601 (US); Newton, Gary S., Adams, NY 13605 (US); Newton, Ronald O., Adams, NY 13605 (US); Newton, Steven R., Adams, NY 13605 (US); Miller, Gary Lynn, Rockford, IL 61103 (US)
(72) Inventor: McCurdy, William B., Jr., Watertown, New York 13601 (US); Newton, Gary S., Adams, NY 13605 (US); Newton, Ronald O., Adams, NY 13605 (US); Newton, Steven R., Adams, NY 13605 (US); Miller, Gary Lynn, Rockford, IL 61103 (US)
(74) Representative: Specht, Peter, Dipl.-Phys.

(56) References cited:
- EP-A- 0 829 402
- EP-A- 1 029 760
- WO-A-00/30909
- WO-A-99/50115
- US-A- 4 898 360
- US-A- 5 301 717

## Description

### BACKGROUND AND SUMMARY OF THE INVENTION

The present invention relates generally to a pressure sensor device to be incorporated into a car control device of an electropneumatic brake for use in a train and more specifically, to improvements in the pressure sensor module.

In general, a train is comprised of a consist of one or more locomotives followed by a series of cars, and a pneumatic brake pipe extending through the train for the pneumatic brake. In recent years, each of the train cars and each of the locomotives have been serially connected by a power and communication trainline. Additionally, each car has an electropneumatic brake system. The serial electric power network and the pneumatic brake network have been integrated to form an electropneumatic braking system which is in communication with the power and communication trainline, which not only delivers power to each of the cars but also provides a communication link, enabling identification and serialization of a train.

In order to integrate the pneumatic and electrical systems in a network, the prior art devised a car control device for placement in each car, and the car control device was then placed in contact with an module and the power and communication trainline. An example of a system is shown in U.S. Patent 5,967,465 to Lumbis et al. and a car control device is disclosed in U.S. Patent 5,967,620 to Truglio et al. Also known from the prior art is a device having individual valves connected to a pressure-fluid outlet connection and connected to a pressure sensor, and electrical lines of electromagnets and the pressure sensors are conducted to a central signal connection, as disclosed in U.S. Patent 5,301,717. Other related prior art disclosures are found in U.S. Patent 4,898,360, WO 99 50115 A, WP 00 30909, EP-A 1 029 760 and EP-A 0 829 402.

A car control device necessarily involves the linking and intertwining of several systems. The car control device is comprised of a pressure sensing system, a control valve system, a power management system, a functional control system, and a manifold. The control valve system is comprised of a plurality of valves which may be electrically controlled in response to electrical signals received from the functional control module to pneumatically control the pneumatic brakes. A plurality of pressure transducers comprising a pressure sensor module communicates with the functional control system. Therefore, a car control device involves an intricate network of systems in fluid and/or electrical communication with one another.

A pressure sensor module (PSM) is an integral part of a car control device. The PSM must be in fluid communication with the manifold in order to detect and determine the pressure at various points in a manifold within the car control device, and the PSM must also be in electrical communication with the functional control module, which provides braking and communication signals, based on information received from the PSM, to the network. Preferably, the pressure sensor module is mounted inside the housing adjacent to the control valve module and the power management module.

The pressure sensor module comprises a casing and a plurality of pneumatic input ports integrally configured on a first face of the casing and to be in fluid communication with the manifold. The ports are configured so that mounting of the module of the pressure sensor module to the manifold sealably connects each of the pneumatic input ports to an aperture in fluid communication with the manifold. Preferably, the casing is sealed except for the ports. A plurality of transducers are inside the casing and in communication with its own port. Each of the transducers is electrically connected to the functional control module.

The pneumatic input ports of the pressure sensor module are connected respectively to receive fluid communication from ports on the manifold which correspond to an emergency reservoir, a brake pipe, a brake cylinder, control valve, and the external atmosphere. The pressure sensed at each of the emergency reservoir, brake pipe, brake cylinder and control valve pressure ports is compared to the atmospheric reference, then translated into a voltage by the respective pressure transducers, thereby producing a signal from the transducers that is proportional to a gauge pressure for each of the respective ports. The casing comprises at least one bore for receipt of a fastener which attaches the casing to the manifold.

The pressure sensor module has a multi-pin electrical receptacle on a second face of the casing. The receptacle is configured such that each of the transducers has an output electrically connected to a respective pin. Additionally, a pair of pins of the receptacle correspond to a pair of common voltage inputs to each of the transducers. A cable is mated with the receptacle in order to transmit these signals to the functional control module of the car control device and provide voltage to the pressure sensor module.

The pressure sensor module further comprises an ambient input port in fluid communication with the external atmosphere. The ambient input port is connected to a conduit that extends through the housing to provide direct fluid communication with atmospheric pressure.

### BRIEF DESCRIPTION OF THE DRAWINGS

Figure 1 is a schematic of a car control device.
Figure 2 is an exploded view of a portion of a car control device of the prior art.
Figure 3 is an exploded view of a pressure sensor module according to the principles of the present invention.
Figure 4 is an assembled view of the pressure sensor module according to the principles of the present invention.
Figure 5 is a bottom view of Figure 4.

### DETAILED DESCRIPTION OF THE PREFERRED EMBODIMENTS

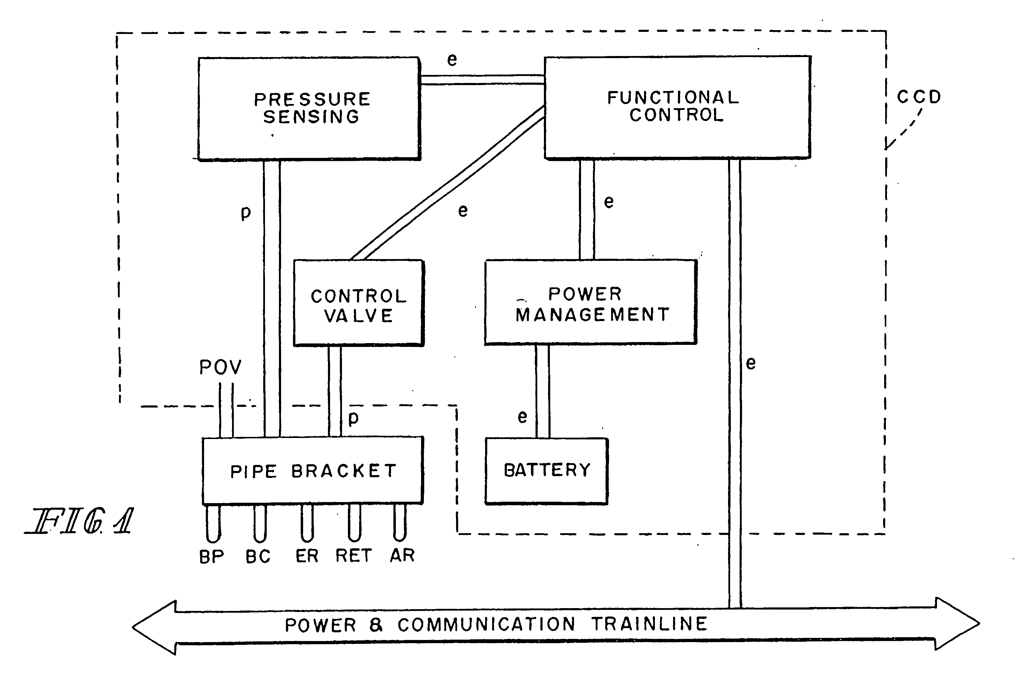

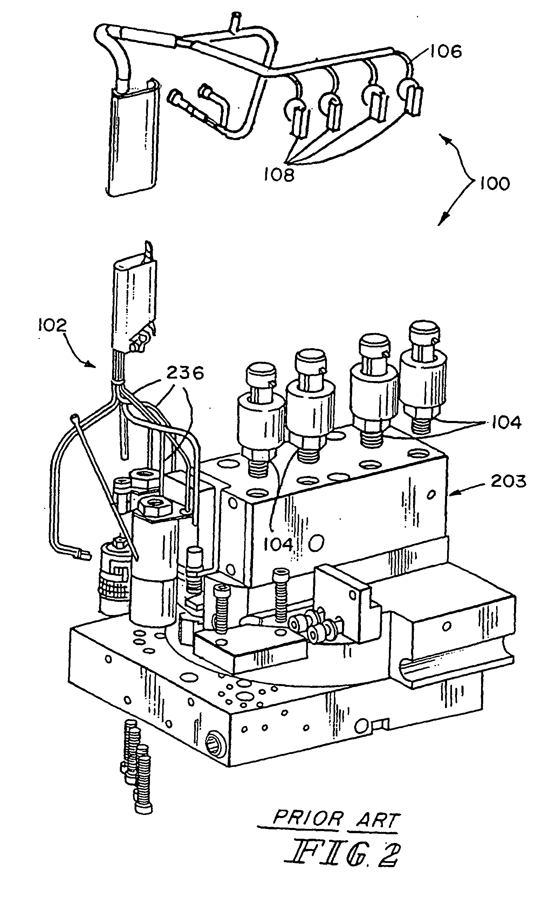

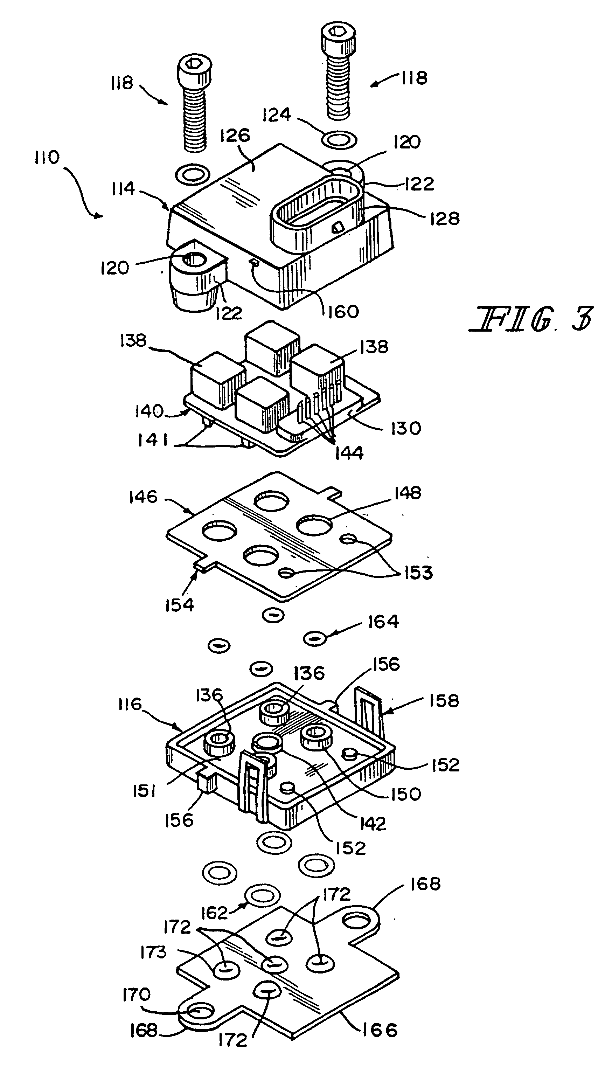

In order to fully understand how the pressure sensor module integrates into the makeup of a car control device, Figure 1 is provided to show the general schematic makeup for the various systems involved in the construction of a car control device. A power and communication trainline connects each car of a train. On each car is a car control device comprising various cooperating systems A pipe bracket connects the car control device CCD to the pneumatic brake system. The pneumatic inputs are brake pipe BP, brake cylinder BC, emergency reservoir ER, retaining valve RET and auxiliary reservoir AR. A control valve system as well as a pressure sensor system is configured to mate with various pneumatic ports to supply pneumatic signals to a control valve system as well as a pressure sensor system by a manifold.

An example of a pressure sensing system of the prior art is shown in Figure 2. Figure 2 shows the pressure sensing system100 mounted on the same assembly as the control valve system 102. The prior art used four separate transducers 104 individually mounted at the CVT port, ERT port, BPT port, and the BCT port, as shown. Each transducer was wired separately. The wiring 106 for the pressure sensing system 100 of the prior art involved four three pin connectors 108 that each included two common connections, namely a positive supply and negative supply signal connection. Therefore, the prior art required at least twelve discreet wires to be connected to the controlling circuits. Additionally, each transducer 104 required an atomospheric reference so that gauge pressure values could be determined. This arrangement required a vented enclosure for the transducer, exposing the transducer and other components within the housing to moisture, dirt and other contaminants that may be in the air:

According to the present invention as shown in Figures 3-5, pressure sensor module 110 comprises casing 112 comprised of an upper casing 114 and a lower casing 116, which is securably mounted to the car control device (not shown) by fasteners 118. Because the pressure sensor module 110 is preferably mounted in an interior area of a car control device (not shown), a wrench clearance is an issue. In order to address the wrench clearance issue, the fasteners 118 are preferably a hex head Allen screws. The Allen screw configuration enables mounting and dismounting using a simple Allen wrench. In the shown embodiment, fasteners 118 extend through apertures 120 that are formed in ears 122 attached to the upper casing 114. Additionally, washers 124 may be positioned between the fasteners 118 and the ears 122. In order to prevent loss, the fasteners 118 may be retained within the apertures 120 by retaining fingers 154 which outwardly extend from gasket 146 to frictionally engage the fastener 118.

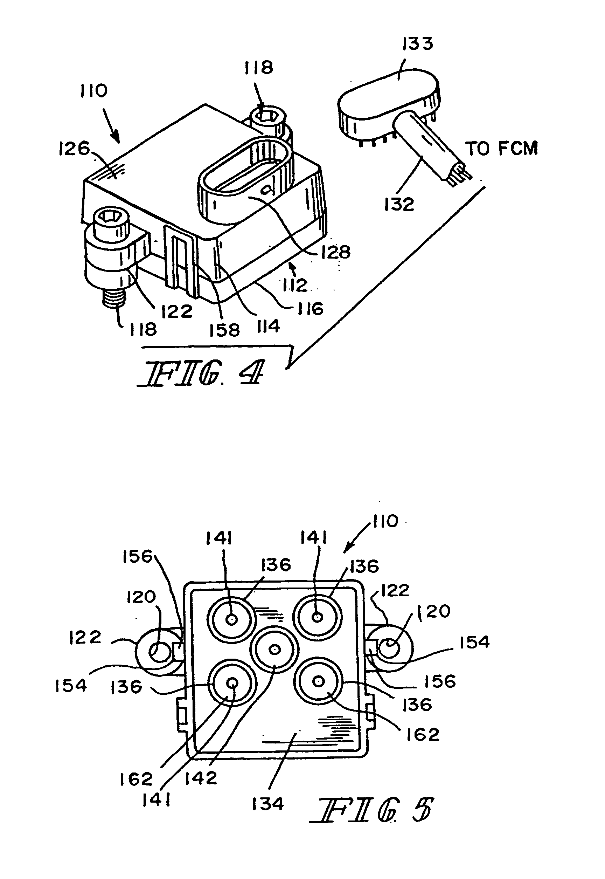

One face of the pressure sensor module 110, preferably a top face 126, has a receptacle 128 formed thereon. The receptacle 128 is formed to protect electrical connector 130, which electrically connects with and mates with an electrical cable 132 by means of a mating plug 133 as shown in Figure 4. Electrical cable 132 extends from receptacle 128 and connector 130 to the functional control module (not shown) of the car control device (not shown).

Figure 5 shows the bottom face of the pressure sensor module 110. The bottom face has a plurality of pressure transducer ports 136. Each port 136 is connected to a pressure transducer 138 sealed in the casing 112. The transducers 138 are electrically connected to the connector 130 by a printed circuit board 140. The pressure transducers 138 detect and measure the pressure at various points in the manifold, these points corresponding to respective pressures in the brake pipe BP, emergency reservoir, brake cylinder, and the output of the control valve. The bottom face 134 of the pressure sensor module 110 further comprises an atmosphere port 142, which provides a common pressure reference to each of the transducers 138 in order to derive a voltage signal proportional to the gauge pressure sensed in each of the respective conduits of the manifold, because the casing 112 is sealed onto the manifold (not shown).

The transducers 138 are each respectively electrically connected to conduit 141 depending from the printed circuit board 140. Preferably, the conduits 141 are integrally configured onto the circuitry of the printed circuit board 140. These conduits 141 and the lower casing 116 are cooperatively configured so that the ports 136 align with the conduits 141.

It is important to determine gauge pressure because a locomotive will likely travel to various altitudes, where the atmospheric pressure may vary significantly. The atmosphere port 142 must be connected to the atmosphere; it can be conveniently placed on any face. As shown in Figure 5, however, the atmosphere port 142 is in the bottom face 134 of the housing 112.

The inventive pressure sensor module is a significant improvement over the prior art pressure sensing assembly shown in Figure 2. First, the space requirement is significantly reduced because each of the transducers determines gauge pressure with respect to a common atmospheric vent. In the prior art, each of the transducers required a separate atmospheric reference. The prior art required a 12 pin connector in order to properly connect the four transducers. The configuration of the invention simplifies the electronics and may be done with a six-pin connector.

Wiring of the pressure sensor module is simplified as well. Shown in Figure 3, connector is a six pin connector 130 configured within the receptacle 132. Four of the pins 144 carry the signal from each of the four transducers 138, and two of the pins 144 are a common plus and minus power source for each of the transducers. All of the electrical connections to the transducers 138 is inside the casing 112. This presents a significant improvement over the prior art, which required twelve discreet wires, as aforementioned. Pin connector 130 is mounted on the printed circuit board 140 with the transducers 138 so that no wires are required therebetween.

A gasket 146 is positioned within the casing 112. The gasket 146 will have holes 148 configured to allow passageway from a respective port 136 to the transducers 138. The ports 136 may each include a raised wall 150 formed on an inner face 151 of lower casing 116. Additionally, the inner face may have raised pins 152 adjacent a single opening (not shown) or a plurality of openings 153 in the gasket 146. The pins 152 and the raised wall of atmosphere port 142 are shorter than the raised walls 150. Thus, the interior of the casing 112 is at atmosphere above and below gasket 146. The raised walls 150 cooperate to hold gasket 146.

Additionally, the gasket 146 may include a retaining finger 154. When the casing 112 is closed, as shown in Figure 4, the retaining finger 154 of gasket 146 is wedged between protuberance 156 of the lower casing 116 and the ear 122 of the upper casing, which further assists in keeping the gasket 146 in place. The retaining fingers 154 of gasket 146 extend past the protuberance 156 and across the aperture 120 in ear 122.

The lower casing 116 includes a latch 158 designed to engage a catch 160 on the upper casing 114 in order to keep the casing 112 closed.

External interface o-rings 162 may be positioned on the bottom face 134 around each of the ports 136 in order to assist in creating an airtight seal between the pressure sensing module 110 and the car control device (not shown). In like manner, internal o-rings 164 may be positioned on inner face 151 of the lower casing 116 and within raised walls 150 of ports 136 in order to assist in creating an airtight chamber within the pressure sensing module 110 about the conduits 141.

As an alternative to individual o-rings 162, an external one-piece gasket 166 may be positioned on a bottom face 134 of the casing 112. The external one-piece gasket 166 will bear a plurality of openings 172 configured to allow access to the pneumatic input ports 136 and the atmosphere port 142. The openings 172 will be surrounded by rims 173. The external one-piece gasket 166 has ears 168 cooperatively configured with the ears 122 on the upper casing 114. The ears 168 on external one-piece gasket 166 are configured to allow fasteners 118 to pass through aperture 170 which may be of a smaller diameter than apertures 120 and further retain the fastener118 on the casing 112.

Although the present invention has been described and illustrated in detail, it is to be clearly understood that the same is by way of illustration and example only, and is not to be taken by way of limitation. The spirit and scope of the present invention are to be limited only by the terms of the appended claims.

## Claims

1. A pressure sensor module (110) separate from and for use in conjunction with an electropneumatic brake having a manifold, the pressure sensor module (110) comprising:
a casing (112);
a plurality of pneumatic input ports (136) on a first face of the casing (112);
a plurality of transducers (138) inside the casing (112) and in communication with its own input port (136);
a common electrical connector (130) on a second face of the casing;
each of the transducers (138) being connected, interior the casing, to the common electrical connector (130), and **characterized by**
a common atmospheric port (142) on the first face of the casing (112) connected to the transducers (138) and, wherein the casing (112) is sealed.

2. The pressure sensor module (110) as in claim 1, wherein the casing (112) comprises an upper casing (114) and a lower casing (116) cooperatively formed to mate with one another to form a generally sealed interior chamber therebetween.

3. The pressure sensor module (110) as in claim 1, further comprising at least one ear (122) on a lateral edge of the casing (112), the at least one ear (122) including an aperture (120) formed therein to receive a fastener (118) in order to fasten the pressure sensor module (110) onto a manifold.

4. The pressure sensor module (110) as in claim 3, further comprising a retainer (154) adjacent the ear (122) extending over part of the aperture (120) to retain the fastener (118) passing through the apertures (120) prior to fastening the pressure sensor module (110) to the manifold.

5. The pressure sensor module (110) as in claim 1, further comprising a printed circuit board (140) positioned within the casing (112); and
wherein the transducers (138) are mounted on the printed circuit board (140) and are in electric communication with the electric connector (130) mounted on the printed circuit board (140).

6. The pressure sensor module (110) as in claim 5, further comprising a gasket (146) positioned between a lower casing (116) and the printed circuit board (140).

7. The pressure sensor module (110) as in claim 1, wherein the electrical connector (130) is a multi-pin electrical receptacle; and,
each of the transducers (138) having an output electrically connected to a respective pin (144) and an input electrically connected to a pair of common voltage input pins (144).

8. The pressure sensor module (110) as in claim 2, further comprising a latch (158) on one of the upper (114) or lower (116) casing, and a catch (160) on another of the upper (114) or lower (116) casing, the latch (158) and the catch (160) cooperatively configured to engage one another and hold the upper (114) and lower (116) casings together.

9. The pressure sensor module (110) as in claim 2, further comprising a plurality of interface o-rings (162), each interface o-ring (162) positioned adjacent a respective pneumatic input port (136) on a bottom face (134) of the lower casing (116).

10. The pressure sensor module (110) as in claim 2, further comprising a plurality of internal o-rings (164), each internal o-ring (164) positioned adjacent a respective pneumatic input port (136) on an inner face (151) of the lower housing (116).

11. The pressure sensor module (110) as in claim 2, further comprising raised walls (150) extending inwardly from, and positioned at each respective pneumatic input port (136), each raised wall extending from an inner surface (151) of the lower casing (116).

12. The pressure sensor module (110) as in claim 1, further comprising a receptacle (128) positioned around the electrical connector (130) and configured to receive a plug (133) from an electric cable (132).

13. The pressure sensor module (110) as in claim 11, further comprising a gasket (146) positioned inside the casing (112), the gasket (146) having holes (148) formed to receive the raised walls (150), which retain the gasket (146) in place.

14. The pressure sensor module (110) as in claim 6, the lower casing (116) including a protuberance (156) protruding outwardly from a lateral edge of the lower casing (116); and
wherein, the gasket (146) includes a retaining finger (154) cooperatively configured with the protuberance (156), such that as the casing (112) is closed, the protuberance (156) and the retaining finger (154) will align with one another, thereby wedging the retaining finger (154) between the protuberance (156) on the lower casing (116) and an ear (122) extending from the upper casing (114).

15. The pressure sensor module as in claim 19, wherein the retaining finger (154) extends into an aperture (120) within the ears (122) to engage a fastener (118) passing therethrough thereby retaining the fastener (118) in the aperture (120).

16. A car control device including:
a pressure sensor module (110) as in Claim 1,
a manifold with output ports for a reservoir, a brake pipe, a brake cylinder, a control valve module, and an external atmosphere port;
an electropneumatic brake on the manifold; and
wherein the sealed pressure sensor module (110) is separate from the electropneumatic brake and the manifold, and is mounted to the manifold with the pneumatic input ports (136) connected in fluid communication with the manifold output ports and the external atmosphere port.

17. A car control device as in claim 16, wherein the output ports and the external atmosphere port mate with the input ports (136) on a common face of the pressure sensor module (110).

## Patentansprüche

1. Drucksensormodul (110), das getrennt von einer elektropneumatischen Bremse mit einem Verteiler und zur Verwendung in Verbindung mit einer solchen vorgesehen ist, wobei das Drucksensormodul umfasst:
ein Gehäuse (112);
eine Mehrzahl von pneumatischen Eingangsöffnungen (136) auf einer ersten Oberfläche des Gehäuses (112);
eine Mehrzahl von Wandlern (138) im Gehäuse (112) und in Verbindung mit dessen eigener Eingangsöffnung (136);
ein gemeinsames elektrisches Anschlussteil (130) auf einer zweiten Oberfläche des Gehäuses;
wobei jeder der Wandler (138) innerhalb des Gehäuses mit dem gemeinsamen elektrischen Anschlussteil (130) verbunden ist, und **gekennzeichnet durch** eine gemeinsame Luftöffnung (142) auf der ersten Oberfläche des Gehäuses (112), die mit den Wandlern (138) verbunden ist, wobei das Gehäuse (112) abgedichtet ist.

2. Drucksensormodul (110) nach Anspruch 1, wobei das Gehäuse (112) ein oberes Gehäuse (114) und ein unteres Gehäuse (116) umfasst, die auf eine Weise kooperativ ausgebildet sind, dass sie zusammen wirkend eine im allgemeinen abgedichtete Innenkammer zwischen sich ausbilden.

3. Drucksensormodul (110) nach Anspruch 1, des weiteren mindestens eine Öse (122) auf einer Seitenkante des Gehäuses (112) umfassend, wobei die mindestens eine Öse (122) eine darin gebildete Öffnung (120) besitzt, die ein Befestigungselement (118) aufnimmt, um das Drucksensormodul (110) an einem Verteiler zu befestigen.

4. Drucksensormodul (110) nach Anspruch 3, des weiteren eine angrenzend an die Öse (122) angeordnete Raste (154) umfassend, welche sich über einen Teil der Öffnung (120) erstreckt, um das durch die Öffnungen (120) gehende Befestigungselement (118) festzuhalten, bevor das Drucksensormodul (110) am Verteiler befestigt wird.

5. Drucksensormodul (110) nach Anspruch 1, des weiteren eine im Gehäuse (112) angeordnete Leiterplatte (140) umfassend; und
wobei die Wandler (138) auf der Leiterplatte (140) montiert sind und in elektrischer Kommunikation mit dem elektrischen Anschlussteil (130) stehen, das auf der Leiterplatte (140) montiert ist.

6. Drucksensormodul (110) nach Anspruch 5, des weiteren eine Dichtung (146) umfassend, die zwischen einem unteren Gehäuse (116) und der Leiterplatte (140) angeordnet ist.

7. Drucksensormodul (110) nach Anspruch 1, wobei das elektrische Anschlussteil (130) ein elektrischer Multi-Pin-Steckverbinder ist; und
wobei jeder der Wandler (138) einen Ausgang aufweist, der elektrisch mit einem entsprechenden Pin (144) verbunden ist, und einen Eingang, der elektrisch mit einem Paar gemeinsamer Spannungseingangs-Pins (144) verbunden ist.

8. Drucksensormodul (110) nach Anspruch 2, des weiteren eine Zunge (158) auf dem oberen (114) oder dem unteren (116) Gehäuse und einen Sperrstift (160) auf dem anderen von oberem (114) oder unterem (116) Gehäuse umfassend,
wobei die Zunge (158) und der Sperrstift (160) zusammenwirkend so konfiguriert sind, dass sie ineinander eingreifen und das obere (114) und untere (116) Gehäuse zusammenhalten.

9. Drucksensormodul (110) nach Anspruch 2, des weiteren eine Mehrzahl von Schnittstellen-O-Ringen (162) umfassend, wobei jeder Schnittstellen-O-Ring (162) angrenzend an eine zugehörige pneumatische Eingangsöffnung (136) auf einer unteren Oberfläche (134) des unteren Gehäuses (116) angeordnet ist.

10. Drucksensormodul (110) nach Anspruch nach Anspruch 2, des weiteren eine Mehrzahl von inneren O-Ringen (164) umfassend, wobei jeder innere O-Ring (164) angrenzend an eine zugehörige Eingangsöffnung (136) auf einer Innenoberfläche (151) des unteren Gehäuses (116) angeordnet ist.

11. Drucksensormodul (110) nach Anspruch 2, des weiteren abstehende Wände (150) umfassend, die sich je einwärts von den zugehörigen pneumatischen Eingangsöffnungen (136) erstrecken und an diesen angeordnet sind, wobei jede abstehende Wand sich von einer inneren Oberfläche (151) des unteren Gehäuses (116) erstreckt.

12. Drucksensormodul (110) nach Anspruch 1, des weiteren eine Steckbuchse (128) umfassend, die um das elektrische Anschlussteil (130) angeordnet und so konfiguriert ist, dass sie einen Stecker (133) von einem Stromkabel (132) aufnehmen kann.

13. Drucksensormodul (110) nach Anspruch nach Anspruch 11, des weiteren eine Dichtung (146) umfassend, die innerhalb des Gehäuses (112) angeordnet ist, wobei die Dichtung (146) Löcher (148) aufweist, die so geformt sind, dass sie die abstehenden Wände (150) aufnehmen, welche die Dichtung (146) fixieren.

14. Drucksensormodul (110) nach Anspruch 6, wobei das untere Gehäuse (116) einen Höcker (156) besitzt, der sich von einer Seitenkante des unteren Gehäuses (116) auswärts erstreckt;
und wobei die Dichtung (146) einen Haltefinger (154) besitzt, der mit dem Höcker (156) auf eine Weise zusammenwirkend konfiguriert ist, dass bei geschlossenem Gehäuse (112) der Höcker (156) und der Haltefinger (154) aneinander ausgerichtet sind und dadurch der Haltefinger (154) zwischen dem Höcker (156) auf dem unteren Gehäuse (116) und einer sich vom oberen Gehäuse (114) weg erstreckenden Öse (122) verkeilt ist.

15. Drucksensormodul (110) nach Anspruch 19, wobei der Haltefinger (154) sich in eine Öffnung (120) in den Ösen (122) erstreckt, um sich mit einem durch diese gehenden Befestigungselement (118) zu verbinden und damit das Befestigungselement (118) in der Öffnung (120) zu halten.

16. Wagensteuerungsvorrichtung, umfassend:
ein Drucksensormodul (110) nach Anspruch 1;
einen Verteiler mit Ausgangsöffnungen für einen Ausgleichsbehälter, eine Bremsleitung, einen Bremszylinder, ein Steuerventilmodul und eine Außenluftöffnung;
eine elektropneumatische Bremse auf dem Verteiler; und
wobei das abgedichtete Drucksensormodul (110) von der elektropneumatischen Bremse und dem Verteiler getrennt und so an dem Verteiler montiert ist, dass die pneumatischen Eingangsöffnungen (136) in Fluidkommunikation mit den Verteilerausgangsöffnungen und der Außenluftöffnung stehen.

17. Wagensteuerungsvorrichtung nach Anspruch 16, wobei die Ausgangsöffnungen und die Außenluftöffnung mit den Eingangsöffnungen (136) auf einer gemeinsamen Oberfläche des Drucksensormoduls (110) zusammen wirken.

## Revendications

1. Module de capteur de pression (110) séparé de et pour utilisation en conjonction avec un frein électropneumatique possédant un collecteur, le module de capteur de pression (110) comprenant :
un carter (112) ;
une pluralité de ports d'entrée pneumatiques (136) sur une première face du carter (112) ;
une pluralité de transducteurs (138) à l'intérieur du carter (112) et en communication avec son propre port d'entrée (136) ;
un connecteur électrique commun (130) sur une seconde face du carter ;
chacun des transducteurs (138) étant relié, à l'intérieur du carter, au connecteur électrique commun (130), et **caractérisé par**
un port atmosphérique commun (142) sur la première face du carter (112) relié aux transducteurs (138), et dans lequel le carter (112) est fermé.

2. Module de capteur de pression (110) selon la revendication 1, dans lequel le carter (112) comprend un carter supérieur (114) et un carter inférieur (116) formés de manière coopérative afin de s'unir l'un avec l'autre afin de former une chambre intérieure généralement fermée entre ceux-ci.

3. Module de capteur de pression (110) selon la revendication 1, comprenant en outre au moins une patte (122) sur un bord latéral du carter (112), la patte au moins (122) comprenant une ouverture (120) formée à l'intérieur afin de recevoir une fixation (118) de manière à fixer le module de capteur de pression (110) sur un collecteur.

4. Module de capteur de pression (110) selon la revendication 3, comprenant en outre un dispositif de retenue (154) adjacent à la patte (122) s'étendant sur une partie de l'ouverture (120) afin de retenir la fixation (118) passant dans les ouvertures (120) avant de fixer le module de capteur de pression (110) sur le collecteur.

5. Module de capteur de pression (110) selon la revendication 1, comprenant en outre une carte de circuit imprimé (140) positionnée dans le carter (112) ; et
dans lequel les transducteurs (138) sont montés sur la carte de circuit imprimé (140) et sont en communication électrique avec le connecteur électrique (130) monté sur la carte de circuit imprimé (140).

6. Module de capteur de pression (110) selon la revendication 5, comprenant en outre un joint statique (146) positionné entre un carter inférieur (116) et la carte de circuit imprimé (140).

7. Module de capteur de pression (110) selon la revendication 1, dans lequel le connecteur électrique (130) est un réceptacle électrique multibroche ; et,
chacun des transducteurs (138) possédant une sortie électriquement reliée à une broche respective (144) et une entrée électriquement reliée à une paire de broches d'entrée à tension commune (144).

8. Module de capteur de pression (110) selon la revendication 2, comprenant en outre un loquet (158) sur l'un du carter supérieur (114) ou inférieur (116), et un cliquet (160) sur l'autre du carter supérieur (114) ou inférieur (116), le loquet (158) et le cliquet (160) étant configurés de manière coopérative afin de s'engager l'un avec l'autre et de maintenir les carters supérieur (114) et inférieur (116) ensemble.

9. Module de capteur de pression (110) selon la revendication 2, comprenant en outre une pluralité de joints toriques d'interface (162), chaque joint torique d'interface (162) étant positionné de manière adjacente à un port d'entrée pneumatique respectif (136) sur une face inférieure (134) du carter inférieur (116).

10. Module de capteur de pression (110) selon la revendication 2, comprenant en outre une pluralité de joints toriques internes (164), chaque joint torique interne (164) étant positionné de manière adjacente à un port d'entrée pneumatique respectif (136) sur une face intérieure (151) du carter inférieur (116).

11. Module de capteur de pression (110) selon la revendication 2, comprenant en outre des parois élevées (150) s'étendant vers l'intérieur, et positionnées à chaque port d'entrée pneumatique respectif (136), chaque paroi élevée s'étendant à partir d'une surface intérieure (151 ) du carter inférieur (116).

12. Module de capteur de pression (110) selon la revendication 1, comprenant en outre un réceptacle (128) positionné autour du connecteur électrique (130) et configuré pour recevoir une fiche (133) provenant d'un câble électrique (132).

13. Module de capteur de pression (110) selon la revendication 11, comprenant en outre un joint statique (146) positionné à l'intérieur du carter (112), le joint statique (146) possédant des trous (148) formés pour recevoir les parois élevées (150), qui retiennent le joint statique (146) en place.

14. Module de capteur de pression (110) selon la revendication 6, le carter inférieur (116) comprenant une protubérance (156) sortant vers l'extérieur à partir d'un bord latéral du carter inférieur (116) ; et
dans lequel le joint statique (146) comprend un taquet de retenue (154) configuré de manière coopérative avec la protubérance (156), de telle sorte que, lorsque le carter (112) est fermé, la protubérance (156) et le taquet de retenue (154) s'alignent l'un avec l'autre, calant ainsi le taquet de retenue (154) entre la protubérance (156) sur le carter inférieur (116) et une patte (122) s'étendant à partir du carter supérieur (114).

15. Module de capteur de pression selon la revendication 19, dans lequel le taquet de retenue (154) s'étend dans une ouverture (120) au sein des pattes (122) afin d'engager une fixation (118) passant à l'intérieur, afin de retenir ainsi la fixation (118) dans l'ouverture (120).

16. Dispositif de commande de voiture comprenant :
un module de capteur de pression (110) selon la revendication 1,
un collecteur muni de ports de sortie pour un réservoir, une conduite de frein, un cylindre de frein, un module de soupape de commande, et un port atmosphérique externe ;
un frein électropneumatique sur le collecteur ; et
dans lequel le module de capteur de pression fermé (110) est séparé du frein électropneumatique et du collecteur, et est monté sur le collecteur avec les ports d'entrée pneumatiques (136) reliés en communication de fluide avec les ports de sortie du collecteur et le port atmosphérique externe.

17. Dispositif de commande de voiture selon la revendication 16, dans lequel les ports de sortie et le port atmosphérique externe sont joints aux ports d'entrée (136) sur une face commune du module de capteur de pression (110).
